# EUROPÄISCHE PATENTSCHRIFT

(11) **EP 1 124 914 B1**
(45) Veröffentlichungstag und Bekanntmachung des Hinweises auf die Patenterteilung: **26.02.2003**
(21) Anmeldenummer: 99939578.3
(22) Anmeldetag: 02.08.1999
(51) Int. Cl.: C10B 53/00, C10B 1/04, C04B 14/02, A62D 3/00, B01J 20/20, B01D 17/022

(54) **VERFAHREN UND ANLAGE ZUM PYROLYSIEREN VON KOHLENWASSERSTOFFHALTIGEN ABFALLPRODUKTEN**
METHOD AND INSTALLATION FOR THE PYROLYSIS OF WASTE PRODUCTS CONTAINING HYDROCARBONS
PROCEDE ET INSTALLATION POUR LA PYROLYSE DE DECHETS CONTENANT DES HYDROCARBURES

(30) Priorität: 31.07.1998 DE 19834596
(43) Veröffentlichungstag der Anmeldung: 22.08.2001
(73) Patentinhaber: Hackl, Eva Maria, 3311 Zeillern (AT)
(72) Erfinder: Hackl, Eva Maria, 3311 Zeillern (AT)
(74) Vertreter: Petra, Elke, Dipl.-Ing.
(86) Internationale Anmeldenummer: IB9901516
(87) Internationale Veröffentlichungsnummer: WO00006667

(56) Entgegenhaltungen:
- EP-A- 0 012 410
- EP-A- 0 234 089
- EP-A- 0 654 644
- DE-A- 2 005 145
- DE-A- 3 030 593
- DE-A- 3 741 110
- DE-A- 4 303 842
- FR-A- 640 770
- GB-A- 705 964
- GB-A- 888 745
- GB-A- 2 084 182
- US-A- 1 586 306
- US-A- 4 401 513
- US-A- 5 783 046
- PATENT ABSTRACTS OF JAPAN vol. 011, no. 159 (C-423), 22. Mai 1987 (1987-05-22) & JP 61 287488 A (CHIYODA YUKA ENG KK;OTHERS: 01), 17. Dezember 1986 (1986-12-17)

## Beschreibung

Die Erfindung bezieht sich auf ein Verfahren und eine Anlage zum Pyrolysieren von kohlenwasserstoffhaltigem Material, insbesondere von Altreifen, wodurch eine wirtschaftliche und umweltfreundliche Nutzung organischer Abfälle, wie Altreifen, Kunststoffe, Papier, Biomasse, wie Agrar- und Forstabfälle, sichergestellt wird.

Es ist eine Vielfalt von Verfahren und Vorrichtungen bzw. Anlagen bekannt, mit denen durch Pyrolyse aus Abfällen wiederverwendbare Materialien, insbesondere Brennstoffe, bereitgestellt werden können. Alle diese Verfahren und Anlagen weisen den gemeinsamen Nachteil auf, daß sie entweder äußerst komplex aufgebaut und betreibbar sind und zudem nur für die gleiche Materialart verwendbar sind.

So sind z.B. aus den DE 26 58 371 C2, DE 35 45 954 A1 und DE 35 23 653 C2 Wirbelschicht-Reaktoren bekannt, bei denen großstückiges Material, z.B. unzerkleinerte oder nur grob zerkleinerte Altreifen, von oben her in den Ofen eingeführt und pyrolysiert werden, während die gasförmigen Stoffe nach oben abgezogen und die Feststoffe nach unten ausgetragen werden. Der Aufbau dieser Einrichtungen ist relativ komplex und durch die Verwendung eines Sand- und Zementklinkerbettes, mit entsprechend radial eingeleitetem Wirbelgas, ist die Aufrechterhaltung der entsprechenden Strömungsverhältnisse im Wirbelbett oft problematisch und kann durch die eingebrachte Materialmasse leicht aus dem Gleichgewicht gebracht werden. Für kleinere, flexible, auf unterschiedliche Pyrolysiermaterialien leicht umrüstbare Ausführungsformen sind diese Anlagen nicht brauchbar.

Des weiteren sind sogenannte Pyrolyse-Durchlauföfen, bzw. Fließbettöfen bekannt, bei denen das Pyrolysegut entweder in ganzen Stücken oder zerkleinert pyrolysiert wird, wie z.B. in den DE 44 47 357 A1, DB 29 25 202 A1, DT 25 20 754 A1 und DE 26 39 165 A1 beschrieben. Diese Pyrolyse-Durchlauföfen weisen ebenfalls eine äußerst komplexe Bauweise auf, sind jeweils für eine bestimmte Materialart und/oder Größe ausgelegt und nicht ohne weiteres auf verschiedene Materialarten umrüstbar.

Auch sind Pyrolyseanlagen bekannt, z.B. aus den DE 27 24 813 A1, EP 0 477 187 B1 und DE 30 30 593 C2, durch die zerkleinerte Altreifen oder andere organische Abfälle pyrolysiert werden. Diese Anlagen sind z.T. komplex aufgebaut und können zudem nicht alternativ, ohne besonderen Umbau, sowohl für ganze Altreifen als auch für Stück- bzw. Schüttmaterial verwendet werden.

Zudem ist aus der DE 31 38 128 C2 ein Verfahren zur thermischen Umwandlung von Altreifen in flüssige und gasförmige Stoffe bekannt, bei dem ein mit ganzen Altreifen beladener Rollwagen horizontal in einen Ofen eingeführt wird. Die Reifen werden dort mit auf ca. 390° erhitztem Öl nach der Rieseltechnik behandelt.

Aus der FR 640 770 A ist eine Anlage zum Destillieren von kohlenstoffhaltigem Material zu entnehmen, die aus mehreren hintereinander angeordneten Öfen besteht, deren jeweilige Böden nach unten entfernt werden können. Diese Böden sind auf Vertikal-Hubeinrichtungen befestigt, auf deren rückgezogener, d.h. unterer Position, je ein Aufnahmebehälter mit zu behandelndem Material aufgesetzt bzw. abgenommen und zum nächsten Ofen weitertransportiert werden. Die Wärmebehandlung erfolgt durch Eindrücken von oben in den jeweiligen Ofen von Behandlungsfluid, wie überhitztem Wasserdampf, der an der jeweiligen Ofenunterseite ausgebracht wird, wobei die im Wasserdampf enthaltenen Destillationsprodukte jeweils durch einen "Entfetter" entfernt werden, wonach das so gereinigte Fluid dem davorstehenden Ofen wieder unter Druck von oben her zugeführt wird. Es erfolgt somit ein von Ofen zu Ofen führender Gegendurchlauf von zu behandelndem Material und Behandlungsfluid, jeweils mit entsprechenden Entfettungsstationen, wodurch ein äußerst komplexer, viel Platz benötigender und somit relativ unwirtschaftlicher Aufbau vorhanden ist.

In der DE 37 41 110 A1 wird ein zylindrischer Pyrolyse-Drehofen beschrieben, in dessen Inneren biologischer Schlamm kontinuierlich hindurchgeführt wird, während innerhalb eines den Drehofen außen konzentrisch umgebenden Hohlraumes Heißgase in entgegengesetzter Richtung geführt wird. Ein unproblematischer, schneller Wechsel von zu pyrolysierendem Material ist durch diese Einrichtung nicht möglich.

Zudem ist aus der US 5,783,046 A eine Einrichtung zum Destillieren oder Pyrolysieren von Gummi oder Altreifen bekannt, bei dem das Material in zwei Öfen nacheinander behandelt wird, wcbei im ersten Ofen eine Aufheizung und im zweiten Ofen die abschließende Destillation bzw. Pyrolyse stattfindet. Altreifen werden dabei in axialer Aneinanderreihung festgebündelt in die horizontal zu beschickenden Öfen eingeführt. Auch hier ist der Aufbau der bekannten Einrichtung sehr komplex und daher unwirtschaftlich.

In der US 1,586,306 A wird ein Tunnelofen beschrieben, in dem das zu destillierende, zerkleinerte Material auf Regalwägen durch den Ofen hindurchgeführt wird und Zonen unterschiedlicher Temperatur durchläuft. Auch dies ist ein relativ komplexes und unwirtschaftliches Behandeln des Materials.

Schließlich beschreibt die DE 43 03 842 A1 ein Verfahren zur Beseitigung von Umweltverunreinigungen durch Adsorbtion mit Hilfe von gemahlener Kohle und Kohlenprodukten, die auf Umweltverunreinigungen, z. B. über auf Wasseroberflächen befindlichem Öl gestreut werden. Das mit Öl vollgesaugte Kohleprodukt wird dann mit Mikroorganismen versetzt und der Fermentation durch diese überlassen, wobei sie entweder so auf der Wasseroberfläche verbleiben oder umpflügbaren Böden oder Bodenaufschüttungen zugesetzt werden. Hierdurch gehen beide, relativ wertvollen Produkte verloren, nämlich die Kohle-Adsorbtionsmittel und das Öl. Eine Wiedergewinnung des Öls ist nicht vorgesehen.

Aufgabe der Erfindung ist es somit, ein Verfahren und eine Anlage oben genannter Gattung anzugeben, die einfach durchführbar bzw. die einfach aufgebaut sind und einen beliebigen, schnellen Wechsel in bezug auf das zu pyrolysierende Material erlauben, z.B. von ganzen Altreifen auf organisches Abfall-Schüttgut, ohne besondere Umrüstung des Ofens selbst.

Diese Aufgabe wird erfindungsgemäß durch ein gattungsgemäßes Verfahren bzw. eine Anlage mit den Merkmalen des Anspruchs 1 bzw. 7 gelöst. In den entsprechend rückbezogenen Unteransprüchen werden jeweils vorteilhafte Weiterbildungen angegeben.

Demgemäß wird das zu pyrolysierende Material von unten vertikal in einen im wesentlichen glockenförmigen, unten öffenbaren Pyrolyseofen mit Hilfe einer entsprechenden Aufnahmevorrichtung eingebracht und bei ca. 500°C pyrolysiert, wobei die flüchtigen Bestandteile (Schwelgas) in bekannter Weise eventuell gereinigt und in einen Kondensator geleitet werden. Dabei werden, je nach Prozeßführung, unterschiedliche gasförmige und flüssige Bestandteile erhalten, z.B. Öl, das u.a. als Heizöl verwendbar ist. Dieses Heizöl kann zum Betreiben des Brenners des erfindungsgemäßen Pyrolyseofens verwendet werden, so daß keine zusätzliche Energie von außen zum Betreiben der Anlage, zumindest des Pyrolyseofens, benötigt wird. Die nach der Pyrolysierung zurückbleibenden, festen Rückstände, wie Stahldrahtschrott und Pyrolyse-Kohlenstoff, werden nach Beendigung der Pyrolyse in bzw. mit der Aufnahmevorrichtung vertikal nach unten wieder aus dem Ofen ausgefahren und in eine Entladestation gebracht und dort aus der Aufnahmevorrichtung entfernt.

Je nachdem, was für ein kohlenwasserstoffhaltiges Material pyrolysiert werden soll, z.B. unzerkleinerte Altreifen verschiedener Größe, zerkleinerte Kunststoffteile oder Bio-Abfallmaterial wie Holz, Stroh, Grünpflanzen, Kräuter usw., sind erfindungsgemäß die Materialien prinzipiell in unterschiedliche Aufnahmevorrichtungen einzubringen.

So werden Altreifen in Aufnahmevorrichtungen eingebracht, die auf einer Grundplatte eine, drei oder mehr vertikal weisende befestigte Aufnahmestangen besitzen, auf denen die Reifen jeweils vertikal übereinander aufgereiht bzw. gestapelt werden. Die so mit Autoreifen bestückte Aufnahmevorrichtung wird auf der Oberseite des abgenommenen Ofenbodens befestigt und mit diesem vertikal nach oben in den offenen Ofen eingeführt. Der so bestückte Ofenboden wird anschließend in an sich bekannter Weise über Schnellverschlüsse, Schraubverschlüsse o.ä. dicht verschlossen. Die Basisplatte der Aufnahmevorrichtung kann aber auch gleichzeitig als Ofenboden ausgebildet sein und ohne weitere Zwischen-Montage direkt in den Ofen eingeführt und an diesem befestigt werden.

Als besonderer Vorteil bei der erfindungsgemäßen Altreifen-Pyrolyse ist anzusehen, daß nach erfolgter Pyrolyse und Ausbringung der Aufnahmevorrichtung in eine Entnahmestation, die Reststoffe in einfacher Weise voneinander getrennt werden können. So wird die Aufnahmevorrichtung um mind. 30° bis ca. 90° zur Vertikalen verschwenkt, wodurch der rieselfähige Pyrolyse-Kohlenstoff aus der Aufnahmevorrichtung z.B. auf ein Transportband fällt, was durch zumindest leichtes Schütteln beschleunigt bzw. verstärkt werden kann. Zurück bleibt Stahldrahtschrott, der als ringförmiges Geflecht an den Aufnahmestangen relativ sauber hängenbleibt und von dort problemlos abgezogen und entfernt werden kann. Das Abziehen kann über eine besondere Kammeinrichtung durchgeführt werden, die z.B. je Stange das darauf befindliche Stahlgewebe von oben her auf die Basisplatte der Aufnahmevorrichtung drückt und eventuell rüttelt, wonach dieses, so zusammengedrückt, von der Stange abgezogen wird, wobei gleichzeitig restliche Kohlenstoffteile abbröseln. Ohne großen Aufwand wird hierdurch eine klare, saubere Trennung der festen Rückstände realisiert.

Im Fall der Pyrolysierung z.B. von zerkleinertem, schüttfähigem Kunststoff- oder Bio-Schüttgut besteht die Aufnahmevorrichtung aus einem oder mehreren, übereinander stapelbaren Aufnahmebehältern, die auf maximal 90% ihrer Höhe mit zu pyrolysierendem Material angefüllt werden. Die mind. 10 % verbleibende lichte Höhe zwischen den Behältern dient der Heißluftzirkulation, wofür zudem die Seitenwände der Behälter noch zusätzlich mit Öffnungen versehen werden können, Lochbehälter bildend. Sinnvoll ist, zumindest die jeweiligen Behälterböden ungelocht zu lassen, um ein Abwärtsrieseln des Pyrolyse-Kohlenstoffes bis auf die Basisplatte der Aufnahmevorrichtung zu verhindern. Selbstverständlich können die Behälterwände zumindest in ihren oberen Randzonen aus Gittermaterial bestehen oder sonstige, an sich bekannte Vorkehrungen zur Optimierung einer Heißgaszirkulation getroffen werden. Auf alle Fälle sind hier nach Beenden der Pyrolyse sowie Ausfahren der Behälter-Aufnahmevorrichtung aus dem Ofen und Einfahren in die Entladestation, die selbstverständlich auch gleichzeitig eine Beladestation sein kann, die Behälter entsprechend aus der Aufnahmevorrichtung zu entnehmen und die festen Pyrolyserückstände aus diesen auszuleeren. Die leeren Behälter können anschließend erneut in eine Aufnahmevorrichtung eingestapelt werden. Um eine unerwünschte Kohlenstoff-Staubbildung beim Ausschütten des Pyrolyserusses aus den Aufnahmevorrichtungen bzw. von der Basisplatte oder aus den Behältern zu vermeiden, kann in einfacher Weise der Pyrolyse-Kohlenstoff direkt aus den Aufnahmevorrichtungen, also von der Vorrichtungsbasisplatte oder aus den Behältern, abgesaugt und in passende Aufnahme- bzw. Transportbehälter eingebracht werden.

Erfindungsgemäß ist des weiteren von Vorteil, wenn bei Beheizung des Pyrolyseofens, z.B. über einen Gas- oder Ölbrenner, die erzeugten Heißgase in den zwischen den konzentrischen Ofenwänden des Doppelwandofens über einen schraubenförmig angeordneten Heißluftkanal, die Heißluft wendelförmig von unten nach oben geleitet wird, dann am oberen Ofenende abgezogen und die Abluftwärme in bekannter Weise wirtschaftlich genutzt wird. So kann dieses heiße Abgas u.a. erneut dem Ofen, u.zw. in dessen unteren Zone, zugeführt werden, oder es kann Heißluft von einem Wärmetauscher eingebracht werden. Hiermit kann der Ofen auch bei vorübergehend ausgeschaltetem Brenner, z.B. während Offenzeiten des Ofens beim Ein- bzw. Ausbringen der Aufnahmevorrichtung mit zu pyrolysierendem Material, auf optimalen Temperatur gehalten werden, so daß der Ofen sehr schnell wieder auf eine optimale Pyrolysetemperatur von 450°-550°C bringbar ist. Eine sehr energetisch sparsame und wirtschaftliche Proßeßführung ist hiermit erfindungsgemäß möglich.

Von Vorteil ist, wenn die wendelförmigen Querwände des Wendelkanals jeweils nur an der Ofen-Innenwand angeschweißt sind, während sie mit der Außenwand thermisch isoliert verbunden sind. Hierdurch wird die Bildung einer Temperaturbrücke vermieden, über die wertvolle Wärme nach außen, statt nach innen abgeleitet wird. Zudem sind in an sich bekannter Weise die Ofenwände außen mit einem thermisch isolierten Mantel umgeben. Auch sind die Ofenwände in Brennernähe mit Schamotte ausgelegt, um diese vor all zu großen thermischen Einflüssen zu bewahren.

Um einen besonders hohen thermischen Wirkungsgrad zu erreichen, sind ins Ofeninnere radial sich einwärts erstreckende Wärmeabgabebleche vorgesehen, die als Ringrippen den gesamten Ofeninnenraum auskleiden. Des weiteren sind zur Arbeitserleichterung und gleichzeitig zur Versteifung der Rippen innen an den Rippen mind. drei oder mehr gleichmäßig zueinander beabstandete, vertikale Einführschienen angebracht. Diese wirken mit an den Aufnahmevorrichtungen, ebenfalls umfangsmäßig gleichmäßig verteilt und in gleicher Anzahl angeordneten Einführstangen zusammen.

Der durch die oben beschriebene Pyrolyse erhaltene Kohlenstoff (Pyrolyse-Ruß) kann in äußerst wertvollen Weisen weiterverwendet werden.

So kann der Pyrolyse-Kohlenstoff in Verbindung mit geringen Zementanteilen für hoch wärmedämmende, somit thermisch isolierende Baumaterialien verwendet werden wie z.B. Platten oder Ziegel.

Auch kann Pyrolyse-Ruß in Verbindung mit Gips oder feuerfestem Zement für Brandschutzelemente Verwendung finden, z.B. für Brandschutzplatten und Feuer- bzw. Hitzeschilder. Dafür werden z.B. drei Anteile Kunststoff bzw. Kohlenstoff mit einem Anteil Gips gemischt, selbstverständlich unter Wasserzugabe und z.B. zu einer Platte verarbeitet. Versuche haben gezeigt, daß eine ca. 1,5 cm dicke Platte oben glühend heiß gemacht und gleichzeitig unten von Hand abgestützt gehalten werden kann, ohne Hitzeeinwirkung auf die Hand.

Eine besondere Verwendung des Pyrolyse-Kohlenstoffes (Ruß) stellt die Verwendung als Feuerlöschmittel dar, z.B. zum Löschen von brennendem Öl. Wird nämlich Kohlenstoff-Staub auf brennendes Öl gestreut, dann wird zuerst die Luft-Sauerstoffzufuhr zur Ölschicht unterbunden und zudem durch den hoch saugfähigen Kohlenstoff das Öl aufgesaugt (Adsorption), so daß durch den Kohlenstoff, der selbst nicht mehr brennt, der Brand gelöscht wird. Hierdurch kann ein brennender Ölteppich oder sogar ein Pfannenbrand in der Küche, sehr effizient und relativ schnell gelöscht werden.

Schließlich kann Pyrolyse-Kohlenstoff zur Verhinderung bzw. Eindämmung der bekanntlich so verheerend sich auswirkenden Ölpest z.B. nach einem Öltankerunfall verwendet werden. Hier wird die Fähigkeit von Kohlenstoff genutzt, große Mengen von Öl aufzusaugen und gleichzeitig nicht mit Wasser benetzbar zu sein, wodurch der Kohlenstoff immer auf der Wasseroberfläche schwimmt. So wird ein nach einem Tankerunglück sich ausbreitender Ölteppich mit Kohlenstoff in entsprechender Menge bestreut, wonach der mit Öl vollgesaugte Kohlenstoff-Teppich, der in seiner Flächenausdehnung erheblich kleiner ist als der vorhergehend vorhandene Ölteppich, abgeschöpft wird. Er kann danach einer erneuten Pyrolyse zugeführt werden, z.B. durch die erfindungsgemäße Anlage, wodurch Öl und Kohlenstoff wieder getrennt werden.

Erfindungsgemäß können, wie bereits vorerwähnt, hochwertige Pflanzenöle, wie Fichtennadelöl oder Heilpflanzenöle erzeugt werden, die in der Medizin und/oder Kosmetik verwendbar sind.

Auch ist es möglich, Tierkörper erfindungsgemäß zu pyrolysieren, wodurch ebenfalls ein Öl und "Tierkohle" erhalten wird. Hierdurch entfällt die herkömmliche Tierkörper-Verbrennung.

Nachfolgend wird die Erfindung anhand eines Ausführungsbeispiels unter Bezug auf die Zeichnung näher erläutert.

Es zeigen:

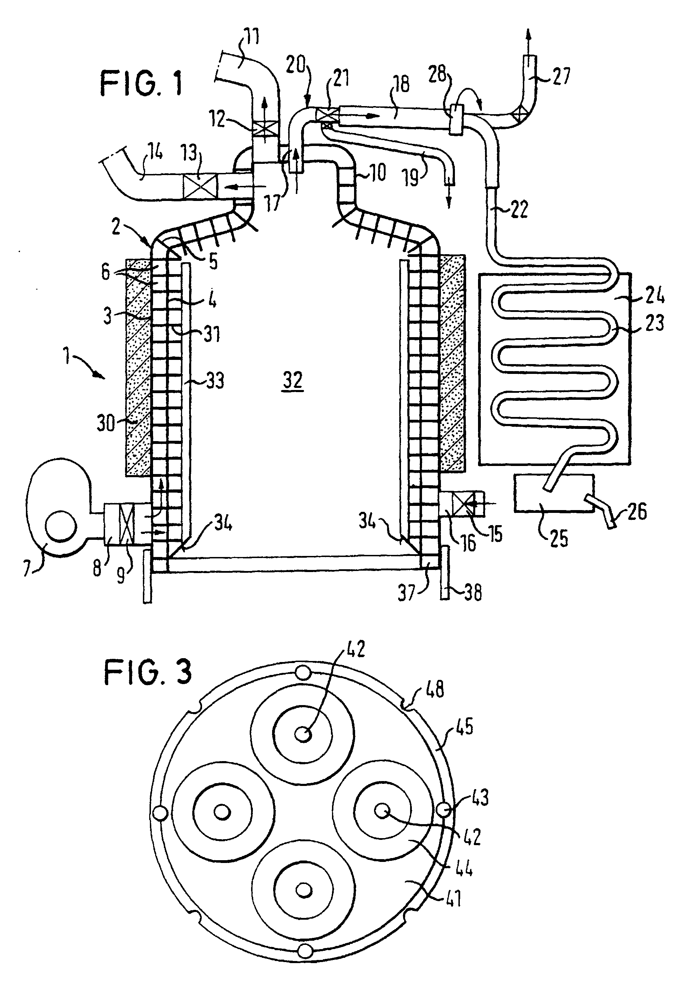

- Fig. 1:: eine schematische Darstellung in vertikalem Schnitt eines erfindungsgemäßen Pyrolyseofens in unten offenem Zustand, ohne Bodenplatte,
- Fig. 2:: eine Seitenansicht auf eine Aufnahmevorrichtung zum Pyrolysieren von Altreifen, in mit einer auswechselbaren Ofen-Bodenplatte fest verbundener Ausführung,
- Fig. 3:: eine Ansicht nach Pfeil III aus Fig. 2, die An ordnung der Altreifen auf der Aufnahmevorrichtung veranschaulichend, und
- Fig. 4:: eine Seitenansicht einer Aufnahmevorrichtung mit Aufnahmebehältern für zu pyrolysierendes Schütt gut, in Ausführung zur auswechselbaren Befestigung auf einer Pyrolyseofen-Bodenplatte.

Wie aus der Zeichnung zu entnehmen ist, besteht die erfindungsgemäße Anlage zum Pyrolysieren von kohlenwasserstoffhaltigem Material aus einem Pyrolyseofen 1. Dessen doppelwandiger, im wesentlichen glockenförmige Ofenwandung 2 besteht aus einer Außenwand 3 mit dazu konstant beabstandeter Innenwand 4, zwischen denen eine wendelförmig von unten nach oben führende Querradialwand 5 angeordnet ist, die einen Wendelkanal 6 bildet, zum schraubenförmigen Hochleiten von unten nach oben in der Doppelwandung der durch einen Brenner 7 erzeugten Heißluft. In der Brenneröffnung 8 ist ein Schieberventil 9 vorgesehen, über den die Einleitung der Heißluft in den Wendelkanal 6 gesteuert wird. An seiner oberen Seite ist die Ofenwandung durchmessermäßig zu einer Kuppel verjüngt, von der wegführend einige Ableitungsrohre angeordnet sind.

So ist nach oben wegführend ein Abgasrohr 11 vorgesehen, über das die vom Brenner 7 herrührende, über den Wendelkanal 6 nach oben transportierte Heißluft durch einen Rauchfang abgeleitet oder zu einem Wärmetauscher oder sonstiger Warmluftverwendung gebracht wird.

Dieses Abgasrohr 11 kann bedarfsweise über ein Ventil 12 verschlossen werden. Aus dem Innenraum der Kuppel 10 führt eine über ein Ventil 13 steuerbare Rohrleitung 14 radial weg, die der Wärmeabsaugung für einen Wärmetauscher oder für einen Wärmebehälter dient, wobei von diesen stammende Heißluft dann z.B. über ein mit einem Ventil 15 versehenes Zuführrohr 16 an der Ofenunterseite in den Wendelkanal 6 gespeist wird.

Im wesentlichen mittig führt zudem vertikal aus der Kuppel 10 ein Austragrohr 20, mit dem die sich in der Kuppel sammelnden Pyrolysegase ausgebracht werden. Das Austragsrohr besteht aus einem kurzen vertikalen Rohrteil 17, das in ein zur Horizontalen etwas nach unten geneigtes Rohrteil 18 übergeht, das einen etwas größerem Querschnitt als vom Rohrteil 17 hat. Eine Kondenswasser-Leitung 19 führt von dem Rohrteil 18 ab, wobei ein temperaturgesteuertes Elektroventil 21 entweder zur Leitung 19 oder zum Gas- und Öldämpfe führenden Rohrteil 18 geleitet wird. Das Rohrteil 18 führt seinerseits entweder über die Ölleitung 22 in eine Kühlschlange 23, die durch einen Kühlwasserbehälter 24 hindurchgeführt ist und in einen Ölsammelbehälter 25 mündet, aus dem das gesammelte Öl über ein Ableitungsrohr 26 ausgebracht werden kann.

Das Rohrteil 18 kann jedoch auch in eine Gasrohrleitung 27 übergehen, was über ein Dreh-Schaltteil 28 zu bewerkstelligen ist. In diese Gasrohrleitung 27 wird Pyrolysegas, das im weiteren als Brenngas z.B. zum Brenner 7 geführt werden kann, abgeleitet, insbesondere bei einer Pyrolyse-Prozeßführung zur Gaserzeugung, z.B. von Holzgas. Sie ist in gleicher oder ähnlicher Weise wie die Leitung 22, z.B. über Kühlschlange und Kühlbehälter, kühlbar. Anzumerken ist, daß ein im wesentlichen druckloser, geschlossener Gas-Kreislauf stattfinden kann, wobei kein Gas nach außen tritt.

Zu der den Wendelkanal 6 bildenden Radialwand 5 ist anzumerken, daß diese lediglich an der Ofeninnenwand 4 durch Schweißen o.ä. befestigt ist, während sie zur Außenwand 3 lediglich thermisch isoliert abgedichtet ist, zur Vermeidung unnötiger Temperaturableitung nach außen. Der Ofen ist zudem nach außen hin mit einem Isolierungsmantel 30 versehen, während an der Innenwand 4 radial nach innen weisende Rippen 31 vorgesehen sind, die zum besseren Wärmetransfer in den Ofeninnenraum 32 dienen.

An der Innenseite der Rippen 31 sind in gleichmäßiger Umfangsaufteilung mindestens drei vertikale Einführschienen 33 befestigt, die an ihrer unteren Seite eine Einführschräge 34 bilden. Der Ofen ist nach unten hin durch ein Flanschteil 37 abgeschlossen, an dem Befestigungselemente 38 in Form von Schrauben o.ä. für einen noch im Zusammenhang mit den weiteren Figuren zu beschreibenden Ofenboden aufweisen.

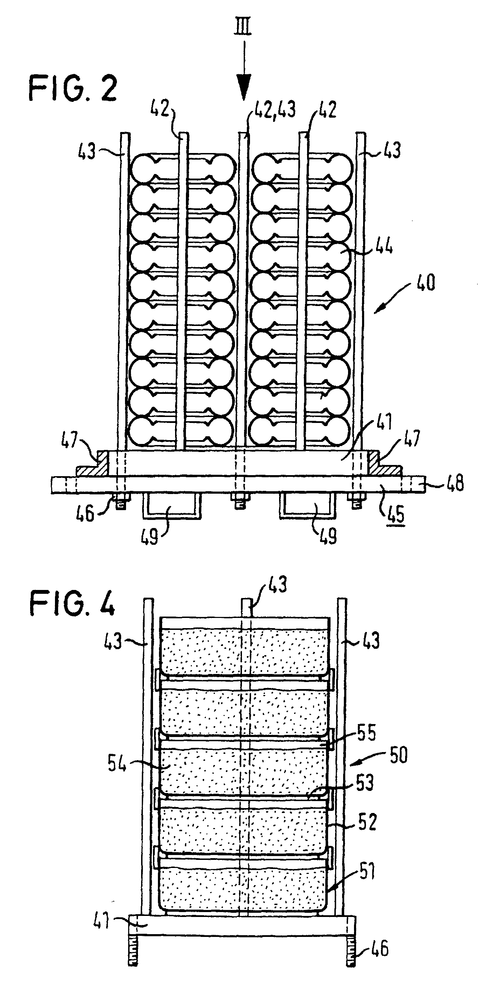

Wie aus Fig. 2 ersichtlich, besteht erfindungsgemäß eine erste Aufnahmevorrichtung 40 im wesentlichen aus einer Basisplatte 41, auf der mehrere Aufnahmestangen 42 zur vertikal aufeinandergestapelten Aufnahme von Altreifen 44 befestigt sind. In dieser Ausführungsform sind vier Aufnahmestangen vorgesehen. Deren Anordnungsweise auf der Basisplatte 41 ist abhängig von der Größe der Altreifen und des Pyrolyseofens bzw. der Basisplatte 41 der Aufnahmevorrichtung 40.

Am äußeren Umfang der Basisplatte 41 sind des weiteren Einführstangen 43 vorgesehen, die mit den Einführschienen 33 des Pyrolyseofens 1 beim Einführung der Aufnahmevorrichtung 40 in den Pyrolyseofen zusammenwirken und Beschädigungen der Aufnahmevorrichtung und/oder der Ofeninnenauskleidung vermeiden helfen. Die Basisplatte 41 ist über Schraub-Befestigungselemente 46 an einer Bodenplatte 45 befestigt, die ihrerseits einen dichtenden Befestigungsflansch 47 aufweist. Der Befestigungsflansch wirkt, wenn die Aufnahmevorrichtung 40 in den Pyrolyseofen 1 eingeführt und befestigt wird, mit dem Flanschteil 37 des Pyrolyseofens zur abdichtenden Befestigung zusammen, wonach durch Zusammenwirken von Befestigungsaugen 48 mit den Befestigungselementen 38 des Ofens die Aufnahmevorrichtung 40 über die Bodenplatte 45 befestigen. An der Unterseite der Bodenplatte 45 sind Stapelaufnahmen 49 vorgesehen, über die die Aufnahmevorrichtung 40 gehandhabt wird. D.h. über einen Gabelstapler wird in die Stapelaufnahmen 49 eingegriffen, die Befestigungselemente 38, 48 werden gelöst, der Gabelstapler, der die Aufnahmevorrichtung 40 über deren Bodenplatte 45 trägt, senkt diese vertikal ab, bis sie insgesamt aus dem Ofen herausgefahren ist und fährt sie in eine Entladestation, wonach er eine neu beladene Aufnahmevorrichtung zum Ofen bringt und vertikal in diesen einhebt bzw. -führt.

Die in Fig. 4 dargestellte Aufnahmevorrichtung 50 besitzt ebenfalls eine Basisplatte 41 an der Schraub-Befestigungselemente 46 zur Befestigung an einer hier nicht dargestellten Bodenplatte, ähnlich wie in Fig. 2 dargestellt, dienen.

Auch hier sind an der Basisplatte 41 Einführstangen 43 vorgesehen, die mit den Einführschienen 33 beim Ein- und Ausführen zusammenwirken. Auf der Basisplatte 41 sind Aufnahmebehälter 51 vertikal übereinandergestapelt aufgesetzt, die sich über jeweils vorgesehene Stapelränder 53 gegeneinander abstützen. Selbstverständlich kann auch eine Auslegung dahingehend vorgenommen werden, daß eine zusätzliche Stütze der Aufnahmebehälter 51 über die Einführstangen 43 stattfindet. In die Aufnahmebehälter 51 ist Schüttgut 54 eingebracht und zwar nur so weit, daß zum oberen Behälterrand bzw. zum darübergestapelten Aufnahmebehälter 51 ein Abstand 55 offenbleibt, der dem schnellen, ungehinderten Wärmetausch dient. Zudem sind in den vertikalen Wänden 52 der Aufnahmebehälter 51 Lochungen vorgesehen, sofern es sich nicht um ein Schüttgut handelt, das über diese Wandlöcher seitlich herausrieseln könnte.

### BEZUGSZEICHENLISTE

- 1.: Pyrolyseofen
- 2.: Ofenwandung
- 3.: Außenwand
- 4.: Innenwand
- 5.: Radialwand
- 6.: Wendelkanal
- 7.: Brenner
- 8.: Brennerkanal
- 9.: Ventil
- 10.: Kuppel
- 11.: Abgasrohr
- 12.: Ventil
- 13.: Ventilrohr
- 14.: Rohrleitung
- 15.: Ventil
- 16.: Zuführrohr
- 17.: Rohrteil
- 18.: Rohrteil
- 19.: Kondenswasser-Leitung
- 20.: Austragrohr
- 21.: Elektroventil
- 22.: Ölleitung
- 23.: Kühlschlange
- 24.: Kühlwasserbehälter
- 25.: Ölsammelbehälter
- 26.: Ableitungsrohr
- 27.: Gasrohrleitung
- 28.: Schaltteil
- 29.: -
- 30.: Isoliermantel
- 31.: Rippen
- 32.: Ofeninnenraum
- 33.: Einführschienen
- 34.: Einführschräge
- 35.: -
- 36.: -
- 37.: Flanschteil
- 38.: Befestigungselement
- 39.: -
- 40.: Aufnahmevorrichtung
- 41.: Basisplatte
- 42.: Aufnahmestange
- 43.: Einführstange
- 44.: Altreifen
- 45.: Bodenplatte
- 46.: Befestigungselement
- 47.: Befestigungsflansch
- 48.: Befestigungsaugen
- 49.: Stapleraufnahme
- 50.: Aufnahmevorrichtung
- 51.: Aufnahmebehälter
- 52.: Wand
- 53.: Stapelränder
- 54.: Schüttgut
- 55.: Abstand

## Patentansprüche

1. Verfahren zum Pyrolysieren von kohlenwasserstoffhaltigen Abfallprodukten, insbesondere von Altreifen, bei dem
a) nur ein Pyrolyse-Ofen (1) vorgesehen ist, wobei das zu pyrolysierende Material außerhalb des Ofens (1) in einer Beladestation in oder auf eine Aufnahmevorrichtung (40, 50) eingebracht wird,
b) danach die Aufnahmevorrichtung (40, 50) von unten in einen unten offenen Pyrolyseofen eingeführt wird, den Ofen (1) gleichzeitig dicht abschließend,
c) wonach der Ofen (1) von außen über Brenner (7) zur Pyrolysetemperatur von ca. 500°C aufgeheizt und die Pyrolyse vollständig durchgeführt wird,
wobei in dem als Doppelwandofen mit schraubenförmig angeordnetem Heißluft-Wendelkanal (6) ausgebildeten Pyrolyseofen (1) die Heißluft wendelförmig von unten nach oben geleitet und am oberen Ofenende abgezogen werden,
und wobei die Pyrolysegase über ein vertikal aus der an der Oberseite vorgesehene Ofenkuppel (10) führendes Austragrohr (20) ausgebracht werden.
d) dann nach vollständig abgeschlossenem Pyrolysieren die Aufnahmevorrichtung (40, 50) nach unten entfernt und in eine Entladestation gebracht wird, wo die Reststoffe ausgebracht werden,
e) und eine andere, mit zu pyrolysierendem Material beladene Aufnahmevorrichtung aus der Beladestation zum Ofen gebracht und in diesen eingesetzt wird.

2. Verfahren nach Anspruch 1,
**dadurch gekennzeichnet, daß** zum Zwischenwarmhalten des Ofens (1) während dessen Ent- und Beladen von unten, der Ofen mit Hilfe der eigenen Heiß-Abluft oder Wärmetauscher-Luft warmgehalten wird.

3. Verfahren nach Anspruch 1,
**dadurch gekennzeichnet, daß** beim Pyrolysieren von Altreifen (94), die Reifen (44) auf mind, einer nach oben weisenden, vertikalen Aufnahmestange (42) (Abstandsstangen) der die Aufnahmevorrichtung (40) übereinander aufgereiht gestapelt werden.

4. Verfahren nach Anspruch 1,
**dadurch gekennzeichnet, daß** beim Pyrolysieren von land- und forstwirtschaftlichen Produkten oder Schüttgut (54) diese in vertikal übereinandergestapelte, leicht entnehmbare Aufnahmebehälter (51) eingebracht werden.

5. Verfahren nach Anspruch 3,
**dadurch gekennzeichnet, daß** die Aufnahmevorrichtung (40, 42) in der Entladestation um 30° bis 90° zur Vertikalen gekippt und gerüttelt wird, zum Entfernen der rieselfähigen Pyrolyse-Fest-Rückstände, wonach die an den Aufnahmestangen (42) angehängt verbleibenden Metallbestandteile, von diesen abgezogen werden.

6. Verfahren nach Anspruch 4,
**dadurch gekennzeichnet, daß** in der Entladestation die Aufnahmebehälter (50, 51) von der Aufnahmevorrichtung (56) vertikal entnommen und die darin befindlichen Pyrolyse-Fest-Rückstände, durch entsprechendes Auskippen und Rütteln oder Absaugen ausgebracht werden, wonach sie erneut beladen und in eine Aufnahmevorrichtung (50) eingesetzt werden.

7. Anlage zur Durchführung des Verfahrens den Ansprüchen 1 bis 6, bestehend aus
- nur einem Pyrolyseofen (1), der ein elektrisch oder über Öl- oder Gasbrenner (7) von außen beheizbarer Doppelwandofen mit wendelförmigen von unten nach oben führenden Querwände (5) ist, die einen Wendelkanal (6) für die schraubenförmig von unten nach oben geleitete und am oberen Ofenende abgezogene Heißluft bilden, und der zum Ausbringen der Pyrolysegase ein vertikal aus der an der Ofenoberseite vorgesehenen Ofenkuppel (10) führendes Austragrohr (20) aufweist,
- wobei der Ofen einen vertikal absenkbaren Boden (45) besitzt und über diesen von unten vertikal be- und entladbar ausgebildet ist,
- und wobei die zylindrische Ofen-Innenwand (4) mit radial nach innen weisenden Wärmeabgabeblechen bzw. Strahlrippen (31) ausgerüstet ist.

8. Anlage nach Anspruch 7,
**dadurch gekennzeichnet, daß** mind. eine Material-Aufnahmevorrichtung (40, 50) vorgesehen ist, die auf der Oberseite des vertikal bewegbaren Bodens (45) befestigbar oder Teil des Bodens ist, somit gleichzeitig die Verschlußbodenplatte (45) des Ofens (1) ist.

9. Anlage nach Anspruch 8,
**dadurch gekennzeichnet, daß** für einen Ofen mehrere Ofenböden (45, 47) mit je einer daran fest angeordneten Aufnahmevorrichtung für das zu pyrolysierende Material vorgesehen sind.

10. Anlage nach Anspruch 8,
**dadurch gekennzeichnet, daß** nur ein Ofenboden (45, 47) und mehrere separate, mit diesem zusammenwirkende Aufnahmevorrichtungen (40, 50) vorgesehen sind, die auf der Bodenplatte (45) des Ofenbodens über Schrauben, schnell befestigbar ausgebildet sind.

11. Anlage nach Anspruch 8,
**dadurch gekennzeichnet, daß** zum Pyrolysieren von Altreifen (44) die Aufnahmevorrichtung (40) an einer Basisplatte (41) befestigte, vertikal aufragende Aufnahmestangen (42) zum stapelnden Aufeinanderreihen der Reifen (44) besitzt.

12. Anlage nach Anspruch 11,
**dadurch gekennzeichnet, daß** zum Pyrolysieren von zerkleinertem, schüttfähigem Material, mind. ein stapelbarer Aufnahmebehälter (41) mit seitlichen Wandöffnungen als Lochblech-Behälter vorgesehen sind.

13. Anlage nach Anspruch 7,
**dadurch gekennzeichnet, daß** zum sicheren Einführen der Aufnahmevorrichtungen (40, 50) an diesen mindestens drei nahe dem äußeren Umfang an deren Basisplatte (41) vertikal angeordnete Einführstangen (43) vorgesehen sind, während im Pyrolyseofen (1) vertikale, zur Ofen-Innenwand (4) radial beabstandet aufgebrachte Einführschienen (33), mit öffnungsseitigen Einführschrägen (34), angeordnet sind.

14. Anlage nach Anspruch 1,
**dadurch gekennzeichnet, daß** das obere Heißluft- oder Abgasrohr (11) und/oder die Leitung von einem Wärmetauscher zu einem Einführstutzen bzw. Zuführrohr (16) am unteren Ende des Ofens (1) geführt ist.

15. Anlage nach Anspruch 7,
**dadurch gekennzeichnet, daß** die wendelförmigen Querwände (5) des Wendelkanals (6) nur an der Ofen-Innenwand (4) angeschweißt sind, während sie mit der Ofen-Außenwand (3) thermisch isoliert verbunden sind, und daß die Ofenwände (3, 4) in Nähe des Brenners (7) mit Schamotte ausgelegt sind und der Ofen insgesamt außen eine thermisch isolierende Ummantelung (30) aufweist.

## Claims

1. A process for the pyrolysis of waste products containing hydrocarbons, in particular used tires, in which
a) only one pyrolysis furnace (1) is provided, the material which is to be pyrolyzed being introduced into or onto a receiving device (40, 50) in a loading station outside the furnace (1),
b) the receiving device (40, 50) is then introduced from below into a pyrolysis furnace which is open at the bottom, at the same time tightly closing the furnace (1),
c) after which the furnace (1), by means of burners (7), is externally heated to the pyrolysis temperature of approximately 500°C and the pyrolysis is carried out completely, the hot air being passed helically from the bottom upward in the pyrolysis furnace (1), which is designed as a double-walled furnace with a helically arranged hot-air helical duct (6), and being extrcted at the upper end of the furnace, and the pyrolysis gases being discharged via a discharge pipe (20) which leads vertically out of the furnace dome (10) provided at the top side,
d) then, after pyrolysis has concluded completely, the receiving devices (40, 50) is removed downward and is moved into an unloading station, where the residues are discharged,
e) and another receiving device which is laden witch material to be pyrolyzed is moved out of the loading station to the furnace and is inserted into the latter.

2. The process as claimed in claim 1,
**characterized in that** for the purpose of keeping the furnace (1) warm on an interim basis while it is being loaded and unloaded from below, the furnace is kept warm with the aid of its own outgoing hot air or at-exchanger air.

3. The process as claimed in claim 1,
**characterized in that** during the pyrolysis of used tires (44), the tires are stacked in rows on top of one another on at least one vertical, upwardly facing receiving rod (42) (spacer rods) of the receiving device (40).

4. The process as claimed in claim 1,
**characterized in that** during the pyrolysis of agricultural and forestry products or bulk material (54), the latter are introduced into receiving containers (51) which can be stacked vertically on top of one another and are easy to remove.

5. The process as claimed in claim 3,
**characterized in that** the receiving device (40, 42), in the unloading station, is tilted through 30° to 90° with respect to the vertical and is shaken, for the purpose of removing the solid pyrolysis residues which are capable of flowing, after which the metal constituents which have remained attached to the receiving rods (42) are pulled off these rods.

6. The process as claimed in claim 4,
**characterized in that** in the unloading station the receiving containers (50, 51) are removed from the receiving device (56) in the vertical direction and the solid pyrolysis residues situated therein are discharged by suitable tilting and shaking or suction, after which they are loaded again and are inserted into a receiving device (50) again.

7. A plant for carrying out the process as claimed in claims 1 to 6, comprising
- only one pyrolysis furnace (1), which is a ouble-walled furnace which can be heated from the outside by electrical means or by means of an oil or gas burner (7) and has helical transverse walls (5) which lead from the bottom upward and from a helical duct (6) for the hot air, which is passed helically from the bottom upward and is extracted at the upper end of the furnace, and which for discharging the pyrolysis gases has a discharge pipe (20) which leads vertically out of the furnace dome (10) provided at the top side of the furnace,
- the furnace having a vertically lowerable base (45) and being designed so that it can be loaded and unloaded vertically from below via this base,
- and the cylindrical furnace inner wall (4) being equipped with heat-emitting plates or radiation rips (31) which face radially inward.

8. The plant as claimed in claim 7,
**characterized in that** at least one material-receiving device (40, 50) is provided, which can be attached to the top side of the vertically moveable base (45) or is part of the base, therefore at the same time is the closure bottom plate (45) of the furnace (1).

9. The plant as claimed in claim 8,
**characterized in that** for a furnace a plurality of furnace bases (45, 47), each with a receiving device for the material to by pyrolyzed arranged fixedly thereon are provided.

10. The plant as claimed in claim 8,
**characterized in that** only one furnace base (45, 47), and a plurality of separate receiving devices (40, 50) which interact with this base are provided, which receiving devices are designed so that they could be rapidly attached to the bottom plate (45) of the furnace base by means of screws.

11. The plant as claimed in claim 8,
**characterized in that** for the pyrolysis of used tires (44) the receiving rods (42), which are attached to a bottom plate (41) and project vertically, for stacking rows of the tires (44) on top of one another.

12. The plant as claimed in claim 11,
**characterized in that** for the pyrolysis of comminutable material which is capable of forming a bulk material, at least one stackable receiving container (41) with lateral wall openings is provided as a perforated-plate container.

13. The plant as claimed in claim 7,
**characterized in that** for reliable introduction of the receiving devices (40, 50), at least three introduction rods (43) which are arranged vertically close to the outer circumference on the base plate (41) thereof are provided on the receiving rods, while vertical itroduction rails (33), which are arranged at a radial distance fromm the furnace inner wall (4) and have openinmg-side introduction slopes (34) are arranged in the pyrolysis furnace (1).

14. The plant as claimed in claim 7,
**characterized in that** the upper hot-air or off-gas pipe (11) and/or line from a heat exchanger to an introduction connection piece or supply pipe (16) is guided at the bottom end of the furnace (1).

15. The plant as claimed in claim 7,
**characterized in that** the helical transverse walls (5) of the helical duct (6) are only welded onto the furnace inner wall (4), while they are connected to the furnace outer wall (3) in a thermally insulated manner, and **in that** the furnace walls (3, 4) in the vicinity of the burner (7) are designed with fire clay, and the furnace overall has a thermally insulating jacket (30) on the outside.

## Revendications

1. Procédé pour la pyrolyse de déchets contenant des hydrocarbures, en particulier des pneus usés, avec l'utilisation de
a) il est prèvu un seul four de pyrolyse (1), où le matériel soumis à la pyrolyse est chargé à l'extérieur du four dans le poste de chargement où dans la benne de chargement (40, 50)
b) ensuite l'équipement de chargement (40, 50) est introduit par le bas dans le four de pyrolyse (1), qui est fermé hermétiquement en même temps.
c) apres quoi le four (1) est chauffé à l'aide de chalumeau de chauffe extérieur (7) à la température de 500°C ; le processus de pyrolyse est mené par la méthode continue. Dans les doubles parois de four à surfaces hélicoïdes l'air chaud produit dans le canal spiral par le four (1) est acheminée du bas vers le haut et évacuée dans la partie supérieure du four; les gaz produits par la pyrolyse sont récupérés par le tuyau de sortie du gaz (20), horizontal, monté dans le dôme (10) du four.
d) ensuite, dès que la pyrolyse est terminée définitivement, la benne de chargement (40, 50) est sortie du bas de four et envoyée au poste de déchargement, où sont aussi déchargés les produits de pyrolyse.
e) puis, dans le poste de chargement, les bennes chargées du matériel pour la pyrolyse sont acheminées vers le four de pyrolyse.

2. Procédé selon la révendication 1,
**caractérisé en ce, que** le maintien de chauffement du four (1) pendant et après le chargement par le bas, s'effectue à l'aide des fumées propres, directement ou avec l'utilisation de l'échangeur de chaleur.

3. Procédé selon la révendication 1,
**caractérisé en ce que** dans la pyrolyse des pneus usés (44), ces pneus (44) sont introduits dans la benne de chargement (40) verticalement à l'aide d'une tige (42) (tige de séparation) et ils sont empilés l'un sur l'autre.

4. Procédé selon la révendication 1,
**caractérisé en ce, que** dans la pyrolyse, les matériaux d'origine agricole, d'industrie de bois et des matériaux meubles (54) sont empilés verticalement dans les bacs l'un sur l'autre, faciles à sortir.

5. Procédé selon la révendication 3,
**caractérisé en ce, que** la benne de chargement (41, 42) reste incliné sous l'angle de 30 ° à 90 ° du pion dans le poste de déchargement afin de vider les produits solides de pyrolyse, où sur les tiges de la benne (42) sont suspendus les reliquats/ résidus sous forme des pièces en métal, (pneus), à en être ensuite enlevées.

6. Procédé selon la révendication 4,
**caractérisé en ce que** dans le poste de déchargement la benne de chargement (50, 51) est enlevée verticalement à l'aide d'un dispositif de chargement et le vidange des produits de pyrolyse de la benne s'effectue par l'inclinaison et le versement, le grattage et l'aspiration, après quoi la benne de chargement (50) est de nouveau remplie du matériel pour la nouvelle pyrolyse.

7. Installation pour l'exécution de le procédé selon la révendication 1 - 6, se composant de
- un seul four de pyrolyse (1), réchauffé électriquement de l'extérieur, à l'aide de brûleur à l'huile ou gaz (7), four aux doubles parois transversalement hélicoïdales, où l'air chaud produit dans le canal spiral par le four (1) est acheminée du bas vers le haut et évacuée dans la partie supérieure du four; les gaz produits par la pyrolyse sont récupérés par le tuyau de sortie du gaz (20), horizontal, monté dans le dôme (10) du four,
- le four est équipé en plaque de base (45), déplaçable verticalement, par laquelle s'effectue verticalement le chargement et le déchargement,
- la parois intérieure du four (4) est équipée en tôles radiales rendant la chaleur éventuellement les cotes en acier (31).

8. Installation selon la révendication 7,
**caractérisé en ce qu'**il est prévu un équipement de chargement (40, 50), qui est fixé sur la partie supérieure de la plaque de base déplaçable verticalement (45) ou de sa partie, de manière qu'elle soit à la fois la plaque de fermeture des bases (45) du four (1)

9. Installation selon la révendication 8,
**caractérisé en ce que** plusieurs plaques de base (45, 47) sont prévues pour un four, et sur chacune d'elles est monté un équipement de chargement pour le matériel soumis au processus de pyrolyse.

10. Installation selon la révendication 8,
**caractérisé en ce qu'**elle est prévue seulement une plaque de base (45, 47) et plusieurs équipements de chargement (40, 50) isolés liés avec elle, qui sont montés sur la plaque de base (45) à l'aide de vis ou de raccords.

11. Installation selon la révendication 8,
**caractérisé en ce que** l'équipement de chargement (40) utilisé pour la pyrolyse des pneus usés (44) contient, montées verticalement sur la plaque de base, les tiges (42) servant pour empiler les pneus l'un sur l'autre.

12. Installation selon la révendication 11,
**caractérisé en ce qu'**elle est prévue pour la pyrolyse des matériaux désagrégés et meubles une benne de chargement, en tôle perforée, équipée en parois ouvrantes de deux cotés.

13. Installation selon la révendication 7,
**caractérisé en ce que** dans le but de l'introduction sûre de l'équipement de chargement (40, 50), il est incorporé dans la plaque de base de la benne (41) trois tiges verticales minimum de guidage (43), qui sont introduites verticalement dans le four (1) et sur les parois intérieures du four sont fixés radialement les rails de guidage qui dans la partie inférieure font un biais une clavette (34)

14. Installation selon la révendication 7,
**caractérisé en ce que** le tuyau supérieur avec de l'air chaud ou le pot d'échappement (11) ou bien l'installation de l'échangeur de chaleur est raccordée au tuyau d'alimentation (16) dans la partie inférieure du four (1).

15. Installation selon la révendication 7,
**caractérisé en ce que** les parois radiales (5) et le canal spiral (6) sont soudés à la parois intérieure du four (4), tandis que la parois extérieure du four (3) est isolée thermiquement et les parois du four (3, 4) à proximité de brûleur (7) sont revêtues des briques de chamotte, et le four possède un manteau d'isolement (30).
